(19) **Europäisches Patentamt / European Patent Office / Office européen des brevets**

(11) **EP 4 153 698 B1**

(12) **FASCICULE DE BREVET EUROPEEN**

(45) Date de publication et mention de la délivrance du brevet:
**03.07.2024   Bulletin 2024/27**

(21) Numéro de dépôt: **21732486.2**

(22) Date de dépôt: **18.05.2021**

(51) Classification Internationale des Brevets (IPC):
**C09K 9/00** *(2006.01)*     **C09D 5/26** *(2006.01)*
**A45D 1/28** *(2006.01)*     **B05D 5/06** *(2006.01)*
**C08K 3/24** *(2006.01)*     **A47J 36/02** *(2006.01)*

(52) Classification Coopérative des Brevets (CPC):
**C09K 9/00; C09D 5/26;** A45D 1/28; A47J 36/02;
B05D 5/06; C08K 3/24

(86) Numéro de dépôt international:
**PCT/FR2021/050877**

(87) Numéro de publication internationale:
**WO 2021/234283 (25.11.2021 Gazette 2021/47)**

(54) **CARACTÉRISATION D'UN COMPOSÉ THERMOCHROME POUR INDICATEUR DE TEMPÉRATURE**

CHARAKTERISIERUNG EINER THERMOCHROMVERBINDUNG FÜR EINEN TEMPERATURINDIKATOR

CHARACTERISATION OF A THERMOCHROME COMPOUND FOR A TEMPERATURE INDICATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **19.05.2020   FR 2005082**

(43) Date de publication de la demande:
**29.03.2023   Bulletin 2023/13**

(73) Titulaire: **SEB S.A.**
**69130 Ecully (FR)**

(72) Inventeurs:
• **TURGIS, Raphaël**
  **69134 Ecully Cedex (FR)**
• **JOUTANG, Isabelle**
  **69134 Ecully Cedex (FR)**
• **LE BRIS, Stephanie**
  **69134 Ecully Cedex (FR)**

(74) Mandataire: **Regimbeau**
**20, rue de Chazelles**
**75847 Paris Cedex 17 (FR)**

(56) Documents cités:
**CN-A- 101 070 435     CN-U- 201 822 599**
**JP-A- 2020 006 356**

**Description**

La présente invention concerne un indicateur de température fonctionnel à visibilité améliorée pour articles ménagers, de préférence pour articles culinaires.

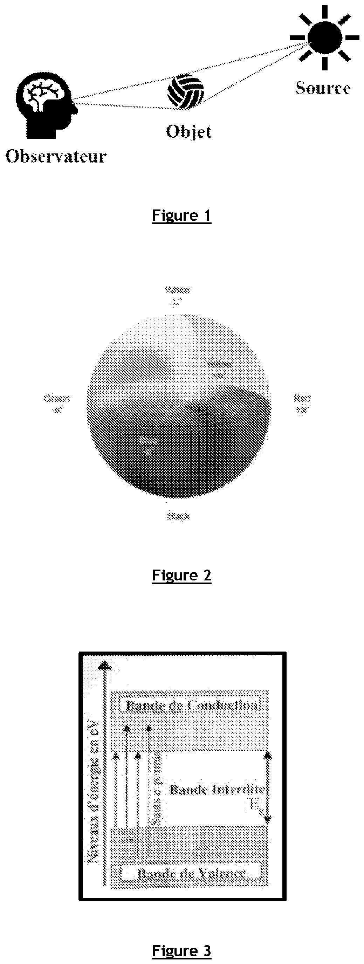

La couleur d'un objet n'a pas de réalité physique, en effet, elle est la conséquence de l'action simultanée de trois facteurs : le flux lumineux ou la source (la lumière), l'observateur (l'oeil → la vision) et l'objet. (Figure 1)

La lumière est une onde dont l'une des particularités est de se propager dans le vide et dans les milieux transparents. Il existe deux types de sources de lumières : les sources primaires qui sont les sources qui produisent leur propre lumière (exemples : soleil, feu, lampe, TV, laser). Les sources secondaires quant à elles, correspondent à des objets qui diffusent la lumière environnante : la lumière d'une source primaire.

Les matières qui réceptionnent la lumière telles que les textiles, les papiers, les produits alimentaires, les revêtements, peuvent se comporter de différentes manières : ils peuvent laisser la lumière les traverser auquel cas ils sont transparents, ou bien ils peuvent empêcher la lumière de passer et ils sont alors opaques.

Si l'objet est opaque, il peut être blanc, et dans ce cas-là il renvoie totalement l'énergie lumineuse. Au contraire, s'il est noir il va absorber toute l'énergie lumineuse. Lorsque le corps est gris (plus ou moins foncé), il renvoie partiellement le rayonnement et absorbe le reste.

C'est l'absorption sélective des radiations à certaines longueurs d'onde du spectre de la lumière du visible qui caractérise la couleur de la matière. Le reste des radiations non absorbées par cette dernière sont alors renvoyées et donc visibles par l'observateur.

La perception visuelle d'un objet est donc liée à la lumière modifiée et transmise par celui-ci, lumière qui est perçue par les yeux et enfin interprétée par le cerveau. L'oeil est capable de discerner environ 350 000 couleurs différentes.

Dans l'oeil, la cornée fait l'image sur la rétine, le cristallin ajuste la mise au point et l'iris agit comme un filtre en dilatant ou rétractant la pupille. C'est dans la rétine qu'il y a la présence d'organes récepteurs : les cônes et les batônnets. Les batônnets assurent la vision nocturne, tandis que les cônes (bleus, verts, rouges) assurent la vision diurne en transformant le signal de la lumière en signal nerveux.

Dans le domaine ménager, il est primordial pour un utilisateur de tels articles de visualiser l'évolution de la température d'un article en cours d'utilisation lorsque ce dernier est soumis à une source de chaleur ou lorsqu'il chauffe.

Dans le cas d'un article culinaire, un bon contrôle de la température lors de la cuisson des aliments est nécessaire pour des raisons sanitaires et gustatives (par exemple pour saisir un steak sur un grill ou dans une poêle), mais aussi pour limiter les surchauffes ponctuelles fragilisant le revêtement de l'article culinaire. Un matériel moins surchauffé aura une durée de vie plus longue. Des aliments cuits à plus basse température possèderont des caractéristiques organoleptiques plus saines. De plus, une cuisson réalisée à la température juste nécessaire permet de limiter l'apport d'énergie et donc l'impact environnemental. Dans le cas d'un fer à repasser ou d'un fer à lisser, un contrôle de la température permet d'éviter les effets indésirables liés à l'utilisation de tels articles comme par exemple l'effet cassant sur les cheveux ou la dégradation des fibres textile et permet aussi d'éviter les accidents domestiques comme les brûlures.

On connaît le brevet français FR 13 88029, qui décrit un ustensile de cuisson muni d'un indicateur thermique constitué d'un corps thermosensible changeant de couleur en fonction de la température de manière réversible, cet indicateur thermique étant formulé dans un revêtement antiadhésif, notamment constitué de polytétrafluoroéthylène. Un pigment thermostable (c'est-à-dire un composé minéral ou organique, qui ne présente pas ou présente un très faible changement de teinte lorsqu'il est soumis à une élévation de température dans un domaine de température donné) peut également être incorporé à l'ustensile de cuisson à titre de témoin pour permettre une appréciation du changement relatif de couleur de l'indicateur thermique, et donc du changement de température. Toutefois, dans cette invention, le témoin thermostable n'est pas intégré dans le revêtement anti-adhésif et n'apporte donc pas une visibilité nette du changement relatif de couleur.

On connaît également le modèle d'utilité CN201822599, qui décrit une marmite comprenant une couche thermochromique de BiVO4.

Pour remédier à ces problèmes, la Demanderesse a ensuite développé un indicateur thermique à base de pigments thermochromes, décrit dans le brevet européen EP 1 121 576. Cet indicateur thermique est un décor comportant au moins deux motifs, l'un à base d'un pigment thermochrome de type oxyde de fer fonçant avec la montée en température, l'autre à base d'un pigment thermochrome s'éclaircissant très légèrement avec la montée en température comportant un mélange de rouge de pérylène et de noir spinelle. Il s'ensuit qu'à une température préétablie (que l'on peut régler entre 160°C et 220°C) on obtient une confusion des couleurs des deux motifs ce qui est un moyen d'identifier cette température préétablie.

L'utilisation simultanée de ces pigments thermochromes dans des zones contigües d'un décor permet effectivement d'améliorer la perception visuelle du changement de température de la surface de cuisson de l'article ménager. Toutefois, ce type d'indicateur thermique reste difficilement compréhensible au premier abord pour l'utilisateur car les deux zones présentent chacune une couleur rouge ayant une valeur chromatique proche l'une de l'autre à température ambiante. Par ailleurs, la confusion des couleurs des motifs du décor se produit dans une zone d'amplitude thermique d'au moins 50°C. Il s'ensuit que l'appréciation du changement de température et le confort de la lecture ne sont pas faciles, en particulier pour un public sans formation particulière. De ce fait, les utilisateurs ont alors tendance à négliger l'information apportée par cet indicateur thermique.

Il y a donc un intérêt à ce que l'on puisse proposer un indicateur thermique qui change nettement de couleur et/ou de propriété optique, lors d'une variation de température, en présentant par exemple des couleurs franchement différentes dans le cas d'un indicateur thermique coloré.

L'avantage de l'invention est de présenter au consommateur une lisibilité, une compréhension et une perception améliorées.

## RESUME DE L'INVENTION

Un premier objet de l'invention concerne un revêtement de la surface d'un article ménager comprenant un décor (a) comprenant un composé pigmentaire $BiVO_4$ présentant un $\Delta E^*$ dans ledit revêtement supérieur ou égal à 11 entre la température ambiante et 150°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 150°C.

Un autre objet de l'invention concerne un revêtement de la surface d'un article ménager comprenant un décor (a) comprenant un composé pigmentaire $BiVO_4$ présentant un $\Delta E^*$ dans ledit revêtement supérieur ou égal à 15 entre la température ambiante et 200°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 200°C.

Un autre objet de l'invention concerne un article ménager comprenant un substrat, de préférence métallique, recouvert en tout ou partie d'un revêtement selon l'invention.

Un autre objet de l'invention concerne un composé pigmentaire $BiVO_4$ présentant un $\Delta E^*$ supérieur ou égal à 22 entre la température ambiante et 150°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 150°C.

Un autre objet de l'invention concerne un composé pigmentaire $BiVO_4$ présentant un $\Delta E^*$ supérieur ou égal à 30 entre la température ambiante et 200°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 200°C.

## DEFINITIONS

On entend par « température ambiante » une température comprise de 18 à 30°C.

Par le terme « couche », il faut comprendre au sens de la présente invention une couche continue ou discontinue. Une couche continue (ou appelée également couche monolithique) est un tout unique formant un aplat total recouvrant complètement la surface sur laquelle elle est posée. Une couche discontinue (ou couche non monolithique) peut comprendre plusieurs parties n'étant pas ainsi un tout unique.

On entend par « couche primaire », « couche d'accroche » ou « primaire d'accroche » toutes les couches de la première la couche appliquée directement sur le support, également appelé substrat (il est préférable que cette couche soit bien adhérente au support et apporte toutes ses propriétés mécaniques au revêtement : dureté, résistance à la rayure) à la dernière couche avant la première couche de décor.

On entend par « couche de finition » ou « finish » une couche de surface continue et transparente, cette couche laissant une visibilité parfaite de la couche de décor tout en la protégeant de l'abrasion et conférant au revêtement ses propriétés antiadhérentes.

On entend par « décor » ou « couche de décor » une ou plusieurs couches continues ou discontinues comprenant une composition pigmentaire. Le décor peut se présenter sous la forme d'un ou plusieurs motifs, d'une ou plusieurs couleurs. Un décor est visible pour l'utilisateur distinctement à l'oeil nu et à distance classique d'utilisation de l'article ménager.

On entend par « couches chevauchantes » des couches superposées partiellement ou complètement superposées. Ces couches peuvent se présenter sous forme de décor avec des motifs partiellement chevauchants, par exemple des disques concentriques.

On entend par « couches adjacentes » des couches non superposées. Ces couches peuvent se présenter sous forme de décor avec des motifs identiques ou différents non superposés, de préférence répartis uniformément.

On entend par « composition pigmentaire de référence de température » une composition comprenant un pigment qui, à une température donnée, permet d'indiquer à l'utilisateur que la température d'utilisation optimale est atteinte. Cette indication se fait par comparaison des couleurs du composé pigmentaire $BiVO_4$ et de la composition pigmentaire de référence de température. Soit la température d'utilisation optimale est atteinte lorsque les couleurs sont identiques, soit la température d'utilisation optimale est atteinte lorsque les couleurs sont visuellement très différentes.

La « composition pigmentaire de référence de température » peut comprendre un pigment qui présente :

- la même couleur que le composé pigmentaire $BiVO_4$, à la température d'utilisation optimale,

  ○ soit parce que ce pigment présente à température ambiante la même couleur que le composé pigmentaire $BiVO_4$ à la température d'utilisation optimale, et ne change pas de couleur avec la température,
  ○ soit parce que ce pigment présente à température ambiante une couleur différente de celle du pigment $BiVO_4$ qui évolue jusqu'à la même couleur que le composé pigmentaire $BiVO_4$ à la température d'utilisation optimale,

- une couleur très différente de celle du composé pigmentaire $BiVO_4$ à la température d'utilisation optimale, que ce pigment change de couleur ou pas avec l'évolution de la température.

La température d'utilisation optimale peut être atteinte lorsque la couleur de la composition pigmentaire de référence de température correspond à une couleur indiquée dans le guide d'utilisation de l'article ménager comprenant le revêtement de l'invention ou à une couleur indiquée sur une échelle de couleurs fournie à l'utilisateur avec ledit article.

La composition pigmentaire de référence de température est thermochrome ou thermostable.

Pour un article ménager qui n'est pas un article culinaire, tel qu'un fer à lisser ou un fer à repasser, la composition pigmentaire de référence de température peut être par exemple une composition pigmentaire de référence de température normale d'utilisation ou d'indication d'un danger de brulure.

Pour un article culinaire, la composition pigmentaire de référence de température peut être par exemple une composition pigmentaire de référence de température de cuisson ou d'indication de risque de surchauffe.

La présente invention présente au moins l'un des avantages suivants :

- le revêtement selon l'invention présente une fonctionnalité thermochrome avec une visibilité marquée, un changement de couleur contrasté sur une plage de températures ciblée, précise et centrée, par exemple autour des températures de cuisson des aliments pour un appareil culinaire ;
- le revêtement selon l'invention peut fournir un bon contrôle de la température, par exemple lors de la cuisson des aliments, ce qui est nécessaire pour des raisons sanitaires et gustatives, mais aussi de sécurité et pour limiter les surchauffes ponctuelles fragilisant le revêtement ;
- le composé $BiVO_4$ présente une réversibilité de ses propriétés thermochromes c'est-à-dire qu'après un changement de couleur sous l'action de la chaleur le composé revient à son état initial, et à sa couleur initiale, lorsque la température diminue ; ce cycle de changement de couleur (réversibilité) peut être répété à l'infini sans perte de ses propriétés ;

- le revêtement selon l'invention présente une stabilité thermique importante lors des élévations de températures, il est stable jusqu'à environ 450°C.

Par l'expression « semi-conducteur thermochrome », il faut comprendre au sens de la présente invention, un composé minéral ou organique, qui présente un changement réversible de coloration lors d'une élévation de température. Le caractère thermochrome progressif et réversible de ces composés semi-conducteurs est lié à la diminution de la largeur de la bande interdite du semi-conducteur à cause de la dilatation du matériau. En effet, la périodicité du réseau d'anions et de cations conduit au rassemblement des niveaux d'énergie en bandes d'énergie. La bande d'énergie remplie de plus haute énergie est appelée bande de valence et la bande d'énergie vide de plus basse énergie est appelée bande de conduction. Entre ces deux bandes, il existe une bande interdite appelée gap. La couleur d'un matériau semi-conducteur peut provenir de la présence d'un transfert de charge qui correspond au passage d'un électron soit d'une bande de valence à une bande conduction sur un même atome, soit communément de l'orbitale d'un anion vers l'orbitale d'un cation (absorption photonique interatomique).

Dans les domaines d'applications envisagées pour la présente invention, un article électroménager du type fer à repasser ou fer à lisser est typiquement utilisé dans une gamme de températures comprise de 100°C à 300°C, de préférence de 100 à 250°C, de manière particulièrement préférée de 100 à 200°C.

Dans les domaines d'applications envisagées pour la présente invention, dans le cas d'un article culinaire, les conditions optimales sont atteintes lorsque le revêtement atteint une température adaptée à la cuisson des aliments, de préférence comprise de 100 à 250°C.

Par « pigment, composé pigmentaire ou composition pigmentaire thermochrome », il faut comprendre au sens de la présente invention, un pigment, un composé pigmentaire ou une composition pigmentaire qui change de couleur en fonction de la température dans un domaine de température donné, ce changement étant réversible. Ce changement de couleur est visible par l'utilisateur à l'oeil nu et à distance d'utilisation classique.

On entend par « pigment, composé pigmentaire ou composition pigmentaire thermostable » un pigment, un composé pigmentaire ou une composition pigmentaire qui ne présente pas de changement de couleur lorsqu'il est soumis à une élévation de température dans un domaine de température donné ou qui présente un changement de teinte lorsqu'il est soumis à une élévation de température dans un domaine de température donné tellement faible qu'il n'est pas visible par l'utilisateur à l'oeil nu et à distance d'utilisation classique.

De préférence, les pigments thermostables présentent un écart de couleur $\Delta E^*$ entre 25°C et 200°C inférieur à 10.

Par « les couleurs sont identiques » on entend indistingables par l'utilisateur à l'oeil nu et à distance d'utilisation classique.

Par l'expression « article ménager », il faut comprendre les articles culinaires et les articles électroménagers.

Les articles électroménagers visés ici sont destinés à produire de la chaleur.

Par l'expression « article culinaire », il faut comprendre au sens de la présente invention un objet destiné à cuisiner. Pour ce faire, il est destiné à recevoir un traitement thermique.

Par l'expression « objet destiné à recevoir un traitement thermique », il faut comprendre au sens de la présente invention un objet qui sera chauffé par un système extérieur de chauffage tels que des poêles, des casseroles, des sauteuses, des woks, des grilles de barbecues et qui est apte à transmettre l'énergie calorifique apportée par ce système extérieur de chauffage à un matériau ou aliment au contact dudit objet.

Par l'expression « objet destiné à produire de la chaleur », il faut comprendre au sens de la présente invention un objet chauffant possédant son propre système de chauffage tels que des fers à repasser, des lisseurs à cheveux, des centrales vapeur, des bouilloires ou des appareils électriques destinés à cuisiner.

On entend par « revêtement à base de fluoropolymère » un revêtement qui comprend un ou plusieurs fluoropolymère(s) dans une ou plusieurs de ses couches.

Par revêtement sol-gel, on entend au sens de la présente invention un revêtement synthétisé par voie sol-gel à partir d'une solution à base de précurseurs en phase liquide, qui se transforme en un solide par un ensemble de réactions chimiques (hydrolyse et condensation), à basse température. Le revêtement ainsi obtenu peut être soit organo-minéral, soit entièrement minéral.

Par revêtement organo-minéral, on entend au sens de la présente invention, un revêtement dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxysilane (TEOS) avec une température de cuisson qui peut être inférieure à 400°C.

CIE = Commission Internationale de l'Eclairage

## FIGURES

*Figure 1 : Les facteurs influençant la couleur*
*Figure 2 : Sphère axée représentant l'espace CIELAB*
*Figure 3 : Schéma illustrant la théorie des bandes d'énergie*
*Figure 4 : Schéma illustrant le lien entre la largeur de la bande interdite (ou Gap) et la couleur observée*
*Figure 5 : Schéma général de la méthode de vision par ordinateur*
*Figure 6 : Réalisation d'un revêtement intégrant un indicateur de température*
*Figure 7 : Schéma illustrant les différents types d'échantillons et l'installation cabine lumineuse + appareil photo*
*Figure 8 : Comparatif des pigments sous forme de poudres*
*Figure 9 : Comparatif des pigments sous forme de décor tampographié sur poêle*
*Figure 10 : schéma de répartition des motifs. 10A = motifs adjacents non chevauchants. 108 = motifs partiellement chevauchants. 10C = motifs chevauchants.*

## DESCRIPTION DETAILLEE DE L'INVENTION

Un premier objet de l'invention concerne un revêtement de la surface d'un article électroménager comprenant un décor (a) comprenant un composé pigmentaire $BiVO_4$ présentant un $\Delta E^*$ dans ledit revêtement supérieur ou égal à 11 entre la température ambiante et 150°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b* dudit composé à température ambiante
$L_2^*$, $a_2^*$ et $b_2^*$ caractérisant les valeurs L*a*b* dudit composé à 150°C.

De préférence, le composé pigmentaire $BiVO_4$ présente un $\Delta E^*$ dans ledit revêtement entre la température ambiante et 150°C supérieur ou égal à 13, de manière encore préférée supérieur ou égal à 15.

Un autre objet de l'invention concerne un revêtement de la surface d'un article électroménager comprenant un décor (a) comprenant un composé pigmentaire $BiVO_4$ présentant un $\Delta E^*$ dans ledit revêtement supérieur ou égal à 15 entre la température ambiante et 200°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 200°C.

De préférence, le composé pigmentaire $BiVO_4$ présente un $\Delta E^*$ dans ledit revêtement entre la température ambiante et 200°C supérieur ou égal à 17, de manière encore préférée supérieur ou égal à 20.

Avantageusement, l'évolution de l'écart de couleur $\Delta E^*$ en fonction de la température est linéaire. De préférence, cette évolution linéaire présente une pente comprise de 0,05 à 0,1, de préférence encore supérieure ou égale à 0,1.

Le composé pigmentaire $BiVO_4$ se présente avantageusement sous la forme de particules constituées de $BiVO_4$. Ces particules ne sont donc pas enrobées. Avantageusement, elles sont brutes.

La couleur peut être mesurée et caractérisée grâce à une classification des couleurs. Cette classification n'est possible que si les couleurs sont définies par des nombres, et c'est grâce aux espaces colorimétriques que cette conversion peut se réaliser.

« Un espace colorimétrique est un modèle mathématique tridimensionnel représentant l'ensemble des couleurs perceptibles, utilisables ou reproductibles par un humain ou un appareil ». De nombreux espaces existent avec leur propre répartition des couleurs ayant des coordonnées précises (exemples : l'espace RVB fortement utilisé par les systèmes de télévision ou encore l'espace CIELAB qui prend en compte la réponse logarithmique de l'oeil).

L'espace colorimétrique CIELAB ou L*a*b* CIE 1976 sert à caractériser les couleurs de différentes surfaces. Cet espace peut être représenté selon un modèle géométrique portant 3 axes orthogonaux représentant les grandeurs L*a*b* (Figure 2). Chaque couleur possède ainsi des coordonnées L*a*b* bien précises et propres à elle :

- L* représentant la clarté sur un axe exprimé en pourcentage soit du noir : 0 au blanc : 100
- a* l'axe allant du vert : -120 au rouge : +120
- b* l'axe allant du bleu : -120 au jaune : +120

Ces coordonnées propres à chaque couleur permettent de calculer plusieurs paramètres tels que l'écart de clarté $\Delta$L*, la différence de teinte $\Delta$H* ou encore la différence de couleur $\Delta$E*.

Le paramètre qui nous intéresse dans cette invention est la différence de couleur $\Delta$E* représentant la mesure de distance entre deux couleurs différentes situées dans l'espace CIELAB. La différence de couleur $\Delta$E* n'a pas d'unité.

|  | Symbole | Relation CIELAB |
|---|---|---|
| Angle de teinte | h | arctan $(b*/a*)$ |
| Ecart d'angle de teinte | $\Delta$h | $h_2 - h_1$ |
| Chroma | C* | $\sqrt{a^{*2} + b^{*2}}$ |
| Ecart de chroma | $\Delta$C* | $C_2^* - C_1^*$ |
| Ecart de clarté | $\Delta$L* | $L_2^* - L_1^*$ |
| Différence de teinte | $\Delta$H* | $\sqrt{(\Delta E^*)^2 - (\Delta L^*)^2 - (\Delta C^*)^2}$ |
| Différence de couleur (Formule CIE1976) | $\Delta$E* | $\sqrt{(\Delta L^*)^2 + (\Delta a^*)^2 + (\Delta b^*)^2}$ |

Formules d'écarts et de différences de teinte et de couleur

Le phénomène du thermochromisme se définit comme étant l'aptitude d'un composé à changer de couleur en fonction de la température à laquelle il est soumis.

Le composé $BiVO_4$ est de couleur jaune à température ambiante et change de couleur de façon continue lorsque la température augmente, en passant par l'orange jusqu'au rouge.

Le composé $BiVO_4$ fait partie de la famille des oxydes semi-conducteurs : cette catégorie présente un mécanisme de coloration également responsable de leurs propriétés thermochromes.

En effet, les matériaux semi-conducteurs sont caractérisés par une théorie de bandes d'énergies représentant les interactions des atomes. Il s'agit d'un modèle dans lequel les électrons de coeur sont supposés être localisés sur l'atome auquel ils appartiennent et sont ainsi présents sur des orbitales atomiques discrètes et n'apparaissent donc pas sur les bandes d'énergie du modèle. Les électrons de valence quant à eux sont susceptibles d'être délocalisés sur tout le réseau cristallin du solide, ils constituent la bande de valence. La bande de conduction est la première bande d'énergie vide qui peut être occupée par les électrons libres. La bande de valence et la bande de conduction sont séparées par une bande interdite dont la largeur (dit aussi « Gap ») est égale à la différence d'énergie présente entre les niveaux d'énergie associés aux bandes de valence et de conduction (Figure 3).

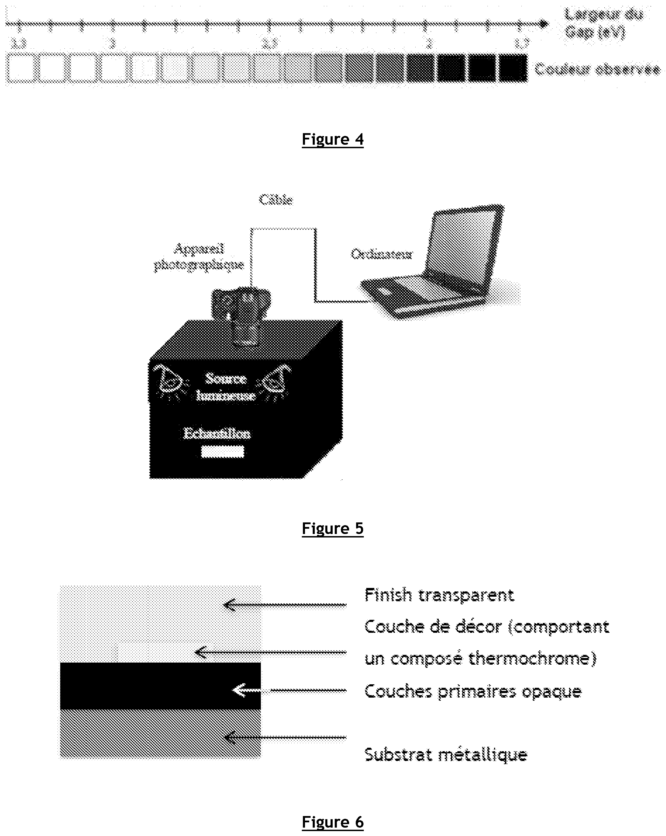

La couleur des matériaux semi-conducteurs est liée à la largeur de la bande interdite qui sépare les bandes de valence et de conduction du matériau en question. Ce sont les transitions électroniques d'énergie égale ou supérieure à la largeur de la bande interdite qui sont responsables de la couleur du matériau. La largeur d'une bande interdite allant de 1,7 eV à 3 eV peut décliner des couleurs allant du noir au blanc en passant par une palette de couleur s'étendant aux couleurs allant du jaune clair au rouge en passant donc par les orangés (rouge correspondant à de basses énergies et le jaune clair à des énergies élevées). (Figure 4)

Sous l'influence de la température, les liaisons interatomiques anions-cations se dilatent, provoquant une diminution du recouvrement orbitalaire. Il en résulte une baisse de la covalence des liaisons et donc une diminution de Gap, le transfert électronique est alors facilité entre la bande de valence et la bande de conduction entre les deux atomes.

Les matériaux semi-conducteurs sont donc thermochromes en raison du changement de la taille de leur structure cristalline sous l'influence d'une augmentation de la température. Si la structure cristalline change, les interactions au sein du réseau ne sont plus les mêmes, la largeur de la bande interdite va alors varier et par conséquent la couleur change.

La plupart des matériaux semi-conducteurs lorsqu'ils sont soumis à une augmentation de température ont une diminution de la largeur de leur bande interdite. Ceci explique le changement de couleur du $BiVO_4$ jaune à température ambiante au rouge lorsqu'il est chauffé.

De préférence, le revêtement selon l'invention comprend au moins deux décors (a) et (b) agencés entre ou dans les couches dudit revêtement :

(a) un décor comprenant au moins le composé pigmentaire $BiVO_4$ tel que défini ci-dessus,
(b) un décor comprenant une composition pigmentaire de référence de température.

De préférence, le taux de composé pigmentaire $BiVO_4$ tel que défini ci-dessus dans le décor (a) est compris de 0,1 à 100 % en poids par rapport au poids de ladite couche à l'état sec, de préférence de 0,2 à 80 % en poids, de manière encore préférée de 0,5 à 70 % en poids.

De préférence, le taux de composition pigmentaire de référence de température dans le décor (b) est compris de 0,1 à 100 % en poids par rapport au poids de ladite couche à l'état sec, de préférence de 0,2 à 80 % en poids, de manière encore préférée de 0,5 à 70 % en poids.

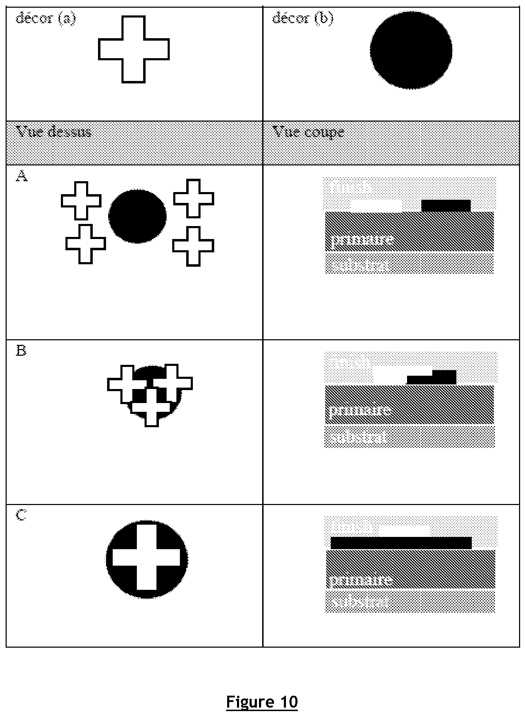

Selon un mode de réalisation, chacun des deux décors (a) et (b) se présente sous forme de motifs adjacents non chevauchants. Par exemple, chaque décor est représenté par des motifs géométriques différents répartis uniformément sur toute la surface et alternés les uns par rapport aux autres (voir Figure 10A).

Selon un autre mode de réalisation, les deux décors (a) et (b) sont partiellement chevauchants. Par exemple, chaque décor est représenté par des motifs géométriques différents répartis uniformément sur toute la surface et partiellement chevauchants (voir Figure 10B).

De préférence, les deux décors (a) et (b) sont chevauchants, soit parce qu'un des deux décors est une couche continue et l'autre décor la recouvre sous forme de motifs, soit parce que les deux décors (a) et (b) se présentent sous forme de deux motifs chevauchants (voir Figure 10C).

De préférence, le composé pigmentaire $BiVO_4$ tel que défini ci-dessus présente une forme cristallographique monoclinique scheelite à température ambiante.

De préférence, le revêtement selon l'invention comprend une ou plusieurs couches de finition appliquée(s) sur le ou les décor(s).

Selon un premier mode de réalisation, le revêtement selon l'invention comprend une ou plusieurs couches primaires appliquées sur le support. Les décors sont alors appliqués sur la dernière couche primaire.

De préférence, le revêtement selon l'invention comprend dans l'ordre suivant à partir d'une des faces du substrat de l'article culinaire : deux couches primaires, les deux décors (a) et (b) et une couche de finition.

Selon un second mode de réalisation, les décors sont appliqués directement sur le substrat.

Le décor peut être appliqué par n'importe quelle technique bien connue de l'homme du métier comme par exemple, par sérigraphie ou par tampographie.

La composition pigmentaire de référence de température peut être choisie dans le groupe constitué de :

- Pigments jaunes de type rutile de titane,
- Pigments jaunes dérivés du bismuth, par exemple sélectionnés parmi les vanadates de bismuth stabilisés (Py184)
- Pigments rouges, par exemple sélectionnés parmi rouge de pérylène, oxyde de fer,
- Pigments orange de type oxyhalogénures de bismuth (PO85),
- Pigments orange de vanadate de bismuth (PO86)
- Pigment orange de zinc étain titane (PO82)
- Pigment orange de sulfure de cérium (PO75 ; PO78)
- Pigment jaune orangé de type rutile d'antimoine titane chrome (PBr24)
- Pigment jaune orangé de type rutile d'étain et de zinc (Py216)
- Pigment jaune orangé d'oxyde de niobium sulfure étain zinc (Py227)
- Pigment jaune orangé d'oxydes doubles d'étain et de niobium
- et leurs mélanges.

Selon un mode de réalisation, le revêtement selon l'invention est un revêtement à base de fluoropolymère.

Le ou les fluoropolymères peuvent se présenter sous forme de poudre ou de dispersion aqueuse, ou leurs mélanges.

Avantageusement, le ou les fluoropolymères peuvent être choisis dans le groupe comprenant le polytétrafluoroéthylène (PTFE), les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

De manière avantageuse, le ou les fluoropolymères peuvent être choisis parmi le polytétrafluoroéthylène (PTFE), les copolymères de tétrafluoroéthylène et de perfluoropropylvinyléther (PFA), les copolymères de tétrafluoroéthylène et d'hexafluoropropène (FEP), un mélange de PTFE et de PFA (PTFE/PFA), un mélange de PTFE et de FEP (PTFE/FEP).

De préférence, le ou les fluoropolymères peuvent représenter de 10 à 99 % en masse, de préférence de 50 à 98 % en masse, de la masse totale en sec de la composition de revêtement antiadhésif.

Selon un autre mode de réalisation, le revêtement selon l'invention est un revêtement sol-gel, organo-minéral ou entièrement minéral. Ces revêtements synthétisés par voie sol-gel à partir de précurseurs de type polyalcoxylate métallique, ont un réseau hybride, généralement de silice avec des groupements alkyles greffés. Une composition sol-gel (SG) comprend au moins un oxyde métallique colloïdal et au moins un précurseur de type alcoxyde métallique.

L'alcoxyde métallique est de préférence un oxyde métallique colloïdal choisi parmi la silice colloïdale et/ou l'alumine colloïdale.

On utilise de préférence à titre de précurseur un alcoxyde métallique choisi dans le groupe constitué par :

- les précurseurs répondant à la formule générale $M_1(OR_1)_n$,
- les précurseurs répondant à la formule générale $M_2(OR_2)_{(n-1)}R_2'$, et
- les précurseurs répondant à la formule générale $M_3(OR_3)_{(n-2)}R_3'_2$, avec :

  $R_1$, $R_2$, $R_3$ ou $R_3'$ désignant un groupement alkyle,
  $R_2'$ désignant un groupement alkyle ou phényle,
  n étant un nombre entier correspondant à la valence maximale des métaux $M_1$, $M_2$ ou $M_3$,
  $M_1$ $M_2$ ou $M_3$ désignant un métal choisi parmi Si, Zr, Ti, Sn, Al, Ce, V, Nb, Hf, Mg ou Ln.

Avantageusement, l'alcoxyde métallique de la solution SG est un alcoxysilane.

A titre d'alcoxysilanes utilisables dans la solution SG du procédé de l'invention, on peut notamment citer le méthyltriméthoxysilane (MTMS), le tétraéthoxysilane (TEOS), le méthyltriéthoxysilane (MTES), le diméthyldiméthoxysilane, et leurs mélanges.

De manière préférée, on utilisera les alcoxysilanes MTES et TEOS, car ils présentent l'avantage de ne pas contenir de groupements méthoxy. En effet l'hydrolyse des méthoxy conduit à la formation de méthanol dans la formulation sol-gel, ce qui compte tenu de son classement toxique nécessite des précautions supplémentaires lors de l'application. A contrario l'hydrolyse des groupements éthoxy ne génère que de l'éthanol possédant un classement plus favorable et donc des prescriptions d'utilisations moins contraignantes pour le revêtement sol-gel.

La formation de ce revêtement sol-gel consiste à mélanger une composition aqueuse A comprenant l'oxyde métallique colloïdal et une solution B comprenant l'alcoxyde métallique. Le mélange se fait avantageusement dans un ratio 40 à 75 % en poids de la composition aqueuse par rapport au poids de la composition sol-gel (A + B), de sorte que la quantité d'oxyde métallique colloïdal représente 5 à 30% en poids de la composition sol-gel (A + B) à l'état sec.

La composition aqueuse A peut comprendre en outre un solvant, en particulier un solvant comprenant au moins un alcool.

La composition aqueuse A peut comprendre en outre au moins une huile de silicone.

La composition aqueuse A peut comprendre en outre un pigment.

La composition aqueuse A peut comprendre en outre une charge minérale.

La composition aqueuse A peut également comprendre de la silice pyrogénée, dont la fonction est la régulation de la viscosité de la composition de sol-gel et/ou la brillance du revêtement sec.

La composition aqueuse A comprend typiquement pour une couche primaire :

i) 5 à 30 % en poids par rapport au poids total de la composition aqueuse A d'au moins un oxyde métallique colloïdal,
ii) 0 à 20 % en poids par rapport au poids de la composition A d'un solvant comprenant au moins un alcool,
iii) éventuellement 0,05 à 3 % en poids par rapport au poids total de ladite composition aqueuse A d'au moins une huile de silicone.
iv) 5 à 30 % de pigment
v) 2 à 30 % de charge minérale

La composition aqueuse A comprend typiquement pour une couche de finition :

i) 5 à 30 % en poids par rapport au poids total de la composition aqueuse A d'au moins un oxyde métallique colloïdal,
ii) 0 à 20 % en poids par rapport au poids de la composition A d'un solvant comprenant au moins un alcool,

iii) éventuellement 0,05 à 3 % en poids par rapport au poids total de ladite composition aqueuse A d'au moins une huile de silicone.
iv) 0,1 à 1 % de paillettes métalliques.

La solution B peut comprendre en outre un acide en termes de Bronsted ou de Lewis. Avantageusement, le précurseur de type alcoxyde métallique de la solution B est mélangée avec un acide de Lewis organique, minéral qui représente 0,01 à 10 % en poids du poids total de la solution B.

Des exemples particuliers d'acides utilisables pour le mélange avec le précurseur de alcoxyde métallique sont l'acide acétique, l'acide citrique, l'acétoacétate d'éthyle, l'acide chlorhydrique ou l'acide formique.

La solution B peut comprendre en outre un solvant, en particulier un solvant comprenant au moins un alcool.

La solution B peut comprendre en outre au moins une huile de silicone.

La solution B peut comprendre en outre des paillettes métalliques.

Selon un mode de réalisation avantageux du procédé de l'invention, la solution B peut comprendre un mélange d'un des alcoxysilanes tels que définis ci-dessus et un alcoolate d'aluminium.

Selon ce mode de réalisation sol-gel, le revêtement selon l'invention comprend dans cet ordre à partir de ladite surface :

- Une ou plusieurs couches primaires sol-gel,
- Un décor sur au moins une partie de la dernière couche primaire comprenant le composé pigmentaire $BiVO_4$ tel que défini ci-dessus.

Un autre objet de l'invention concerne un article ménager comprenant un substrat, de préférence métallique, en tout ou partie recouvert d'un revêtement selon l'invention.

Le changement de couleur du composé pigmentaire $BiVO_4$ permet à l'utilisateur d'être averti d'une part, que l'article est chaud donc présente un risque de brûlures et d'autre part que la surface de l'article a atteint la température adaptée pour son utilisation.

Avantageusement, le substrat de l'article peut être en plastique, en matériau métallique, en verre, en céramique ou en terre cuite. A titre de substrats métalliques utilisables dans le cadre de la présente invention, on peut avantageusement citer les substrats en aluminium ou alliage d'aluminium anodisé ou non, ou en aluminium ou alliage d'aluminium poli, brossé ou microbillé, sablé, traité chimiquement ou en acier inoxydable poli, brossé ou microbillé, ou en fonte de fer ou d'aluminium, ou en titane ou en cuivre martelé ou poli.

A titre d'exemples d'articles ménagers utilisables dans le cadre de la présente invention, on peut notamment citer les cuves de friteuse, les poêlons ou caquelons pour fondue ou raclette, la cuve d'une friteuse ou d'une machine à pain, le bol d'un « *blender* », les plaques d'un fer à lisser et les semelles de fer à repasser.

Pour une meilleure adhérence du revêtement, la surface du substrat peut être traitée de façon à augmenter sa surface spécifique ; pour de l'aluminium ce traitement peut être fait par anodisation (création d'une structure tubulaire d'alumine), par attaque chimique, par sablage... Les autres substrats métalliques peuvent également être polis, sablés, brossés, microbillés.

La ou les couche(s) primaire(s) peuvent comprendre une résine d'accroche, en particulier quand le substrat est traité mécaniquement.

De préférence, la ou les résine(s) d'accroche est(sont) choisie(s) dans le groupe constitué de polyamide imides (PAI), polyether imides (PEI), polyamides (PA), polyimides (PI), polyethercétones (PEK), polyetherethercétones (PEEK), polyarylethercétones (PAEK), polyethersulphones (PES), polyphenylene sulfide (PPS), polybenzimidazoles (PBI), tanins.

Avantageusement, l'article selon l'invention est un article culinaire et le revêtement selon l'invention recouvre en tout ou partie le substrat sur la face recevant les aliments.

Avantageusement, l'article selon l'invention est un fer à lisser et le revêtement selon l'invention recouvre en tout ou partie ses plaques.

Avantageusement, l'article selon l'invention est un fer à repasser et le revêtement selon l'invention recouvre en tout ou partie sa semelle.

De manière avantageuse, l'article est un article culinaire dont l'une des faces du support constitue une face interne concave destinée à être en contact avec des aliments placés à l'intérieur dudit article et l'autre face du support de l'article est une face externe convexe destinée à être en contact avec une source de chaleur.

De préférence, ledit article ménager est un article culinaire, de préférence choisi dans le groupe constitué de casserole, poêle, fait-tout, wok, sauteuse, crêpière, grill, plancha, appareil à raclette, marmite, cocotte, et ledit revêtement est destiné à être mis en contact avec les aliments.

Dans les domaines d'applications envisagées pour la présente invention, un article à chauffer du type article culinaire ou un article chauffant du type fer à repasser est typiquement utilisé dans une gamme de températures comprise de 10°C à 300°C.

Un autre objet de l'invention concerne un composé pigmentaire BiVO$_4$ présentant un ΔE* supérieur ou égal à 22 entre la température ambiante et 150°C, ΔE* étant défini par la formule CIE1976 dans l'espace colorimétrique CIELAB :

$$\Delta E^* = \sqrt{(L_2^* - L_1^*)^2 + (a_2^* - a_1^*)^2 + (b_2^* - b_1^*)^2}$$

L$_1$*, a$_1$* et b$_1$* caractérisant les valeurs L*a*b* dudit composé à température ambiante
L$_2$*, a$_2$* et b$_2$* caractérisant les valeurs L*a*b* dudit composé à 150°C.

Avantageusement, le composé selon l'invention présente un ΔE* entre la température ambiante et 150°C supérieur ou égal à 24, de préférence supérieur ou égal à 26, de manière encore préférée supérieur ou égal à 28, de manière particulièrement préférée supérieur ou égal à 30.

Avantageusement, le composé de l'invention est de structure cristalline monoclinique scheelite à température ambiante.

Un autre objet de l'invention concerne un composé pigmentaire BiVO$_4$ présentant un ΔE* supérieur ou égal à 30 entre la température ambiante et 200°C, ΔE* étant défini par la formule CIE1976 dans l'espace colorimétrique CIELAB :

$$\Delta E^* = \sqrt{(L_2^* - L_1^*)^2 + (a_2^* - a_1^*)^2 + (b_2^* - b_1^*)^2}$$

L$_1$*, a$_1$* et b$_1$* caractérisant les valeurs L*a*b* dudit composé à température ambiante
L$_2$*, a$_2$* et b$_2$* caractérisant les valeurs L*a*b* dudit composé à 200°C.

Avantageusement, le composé selon l'invention présente un ΔE* entre la température ambiante et 200°C supérieur ou égal à 32, de préférence supérieur ou égal à 35, de manière encore préférée supérieur ou égal à 37, de manière particulièrement préférée supérieur ou égal à 40.

Avantageusement, l'évolution de l'écart de couleur ΔE* en fonction de la température est linéaire. De préférence, cette évolution linéaire présente une pente comprise de 0,05 à 0,1, de préférence encore supérieure ou égale à 0,1.

## EXEMPLES DE REALISATION

### Exemple 1 : Sélection de pigments

Les pigments mis en oeuvre sont des poudres de composés inorganiques :

Pigments thermochromes :

- BiVO$_4$, procédé décrit à l'Exemple 2, lots 2b et 2d
- Bi$_2$O$_3$, grade Varistor Fine, commercialisé par la société 5N Plus
- pigment Sicopal® Yellow K1120FG, commercialisé par la société BASF
- pigment Bayferrox® 130, commercialisé par la société Bayferrox

Pigments thermostables (pigments de référence de température) :

- pigment Yellow 10C242, commercialisé par la société The Shepherd Color Company
- pigment Yellow 6716B commercialisé par la société FERRO

Ces composés pouvant être utilisés seuls ou en mélange.

### Exemple 2 : Procédé de synthèse d'un composé pigmentaire BiVO$_4$ selon l'invention

*Procédé 2.1*

A une solution de nitrate de bismuth (0,1 M) dans de l'acide nitrique 1M est ajouté de façon stoechiométrique une solution de vanadate d'ammonium (0,1 M) dans de l'acide nitrique 1M. Le mélange est agité pendant une nuit, filtré, lavé à l'eau puis séché. La poudre est ensuite cuite à 450° C durant 3 heures.

Le vanadate de bismuth est alors obtenu sous forme d'une poudre jaune vif de structure monoclinique scheelite caractérisé par analyse de diffraction des rayons X.

Le procédé se déroule à pH<1 sans ajout d'agent alcalin.

*Procédé 2.2*

A une solution de nitrate de bismuth (0,4 M) dans l'acide nitrique 1M est ajoutée une quantité stoechiométrique de metavanadate de sodium sous forme de poudre. Le mélange est agité durant 2 heures à 80°C. Le précipité est ensuite filtré, lavé à l'eau pour obtenir une poudre jaune de $BiVO_4$ sous forme monoclinique scheelite. La poudre est ensuite recuite à 500°C durant 3 heures.

Le procédé se déroule à pH<1 sans ajout d'agent alcalin.

Le $BiVO_4$ monoclinique scheelite présente alors un $\Delta E = 40$ entre température ambiante et 200°C.

## Exemple 3 : Procédé de synthèse d'un composé $BiVO_4$ non conforme à l'invention (Exemple comparatif)

Le Demandeur a reproduit l'Exemple 1 du brevet CN 101 070 435.

Dans ce procédé un agent alcalin est ajouté pour porter le pH à 2 et une calcination est opérée dans un second temps pour modifier la teinte.

A une solution de nitrate de bismuth (0,1 M) dans une solution d'acide nitrique (4 mol.L$^{-1}$) est ajoutée de façon stoechiométrique une solution de metavanadate d'ammonium (0,1 M) dans de l'acide nitrique (4 mol.L$^{-1}$). Le pH est ajusté à 2 avec une solution d'ammoniaque.

Le mélange est agité pendant 2h. Le précipité est ensuite filtré, lavé à l'eau pour obtenir une poudre jaune clair. Cette poudre possède une structure de type silicate de zirconium quadratique (tétragonale).

Elle est calcinée à 500°C pendant 2h pour obtenir une poudre jaune foncé de structure monoclinique scheelite.

Ce $BiVO_4$ monoclinique scheelite présente alors un $\Delta E = 20$ entre température ambiante et 200°C.

## Exemple 4 : Intégration des composés dans un revêtement antiadhésif fluoré noir

De manière à proposer au consommateur un article culinaire avec un revêtement intérieur antiadhésif et doté d'un décor permettant de le guider dans sa cuisson, les composés à propriétés thermochromes améliorées sont introduits dans un revêtement anti-adhésif comportant plusieurs couches :

- La ou les couches primaires de couleur opaque,
- Le composé thermochrome intégré dans une couche de décor,
- La ou les couches de finition translucide.

### *i. Préparation des deux couches primaires*

Une première formulation à base de dispersion aqueuse de PTFE est préparée.

(a) Primaire 1 / Formule 1a

| Composant | %poids formule humide | %poids film sec |
|---|---|---|
| dispersion aqueuse polymères fluorés | 24 | 60 |
| dispersion aqueuse noir de carbone | 4 | 4 |
| silice colloïdale | 16 | 20 |
| dispersion solvantée résine accroche | 41 | 16 |
| additifs (base, mouillants, etc.) | 6 | - |
| eau | 9 | - |

Une seconde formulation à base de dispersion aqueuse de PTFE est préparée.

(b) Primaire 2 / Formule 2a

| Composant | %poids formule humide | %poids film sec |
|---|---|---|
| dispersion aqueuse polymères fluorés | 48 | 88 |
| dispersion aqueuse noir de carbone | 5 | 4 |
| silice colloïdale | 3 | 3 |
| dispersion solvantée résine accroche | 19 | 5 |
| additifs (base, mouillants, etc.) | 12 | - |
| eau | 13 | - |

Les formulations 1a et 2a sont filtrées avant d'être appliquées au pistolet pneumatique sur l'intérieur d'une calotte préformée en aluminium. Ce support est préalablement au moins dégraissé et dépoussiéré. Pour une meilleure adhérence du revêtement, la surface du support est traitée par sablage de façon à augmenter sa surface spécifique.

Le primaire est appliqué en au moins une couche d'épaisseur de 5 à 50 microns. Dans le cas d'une application en plusieurs couches, chaque couche est séchée avant application de la suivante.

### ii. Préparation du décor thermochrome

Une pâte tampographique contenant un pigment thermochrome tel que décrit à l'Exemple 1 est préparée selon la formulation décrite ci-dessous.

| PTFE 5035Z | Dispersion PTFE | 58,06 |
|---|---|---|
| pigment | Thermochrome | 27,42 |
| SD15 | Epaississant | 1,89 |
| EAU | | 2,13 |
| AMMONIAQUE | Ajusteur de pH | 0,48 |
| PPG | Solvant | 9,72 |
| K7 | Antimousse | 0,30 |
| Total | | 100,00 |

Cette pâte est appliquée sous forme de motifs par tampographie sur la couche de primaire séchée.

### iii. Préparation du décor de référence

Une pâte tampographique contenant un matériau coloré de référence tel que décrit à l'Exemple 1 est préparée selon la formulation décrite ci-dessous.

| PTFE 5035Z | Dispersion PTFE | 59,06 |
|---|---|---|
| Pigment | Thermostable | 23,62 |
| SD15 | Epaississant | 2,19 |
| EAU | | 3,13 |
| AMMONIAQUE | Ajusteur de pH | 0,48 |
| PPG | Solvant | 11,22 |
| K7 | Antimousse | 0,30 |
| Total | | 100,00 |

Cette pâte est appliquée sous forme de motif sur le décor thermochrome séché.

*iv. Préparation de la couche de finition et cuisson*

La couche de finition est réalisée de la même façon que la première couche de primaire, la seule différence étant qu'elle doit rester transparente, elle ne comprend donc pas de pigments mais éventuellement des paillettes.

| Composant | %wt formule humide | %wt film sec |
|---|---|---|
| dispersion aqueuse polymères fluorés | 93 | 99 |
| paillettes | 1 | 1 |
| additifs (base, mouillants, etc...) | 3 | - |
| éthylène glycol | 2 | - |
| eau | 1 | - |

Une fois toutes les couches appliquées et séchées, l'article est cuit à 430°C pendant 11 min.

**Exemple 5 : Méthode de caractérisation des couleurs des échantillons**

Une cabine à lumière consistant en une enceinte fermée équipée d'un éclairage maitrisé est utilisée. Un appareil photo est directement installé au-dessus de la cabine et est lié à un logiciel de traitement de photo qui permet d'obtenir des caractéristiques liées à la couleur des échantillons analysés. La cabine à lumière est éclairée avec l'illuminant D50 (correspondant à la lumière du jour).

Le principe de cette caractérisation est de positionner le matériau à analyser dans la cabine, de le prendre en photo et d'extraire les données colorimétriques de la photo grâce à un logiciel adapté.

Grâce aux valeurs L*a*b* obtenues, un écart de couleur (ou variation de couleur) ΔE* est obtenu à chaque température par rapport à la température de référence (TA = 25°C) pour un échantillon donné, ΔE* étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

avec :

- $L_1{}^*$, $a_1{}^*$, $b_1{}^*$ : coordonnées de la couleur du pigment à la température standard (25°C ou TA) ou du pigment de référence.
- $L_2{}^*$, $a_2{}^*$, $b_2{}^*$ : coordonnées de la couleur du pigment à température choisie (25°C / 100°C / 150°C / 180°C / 200°C / 250°C) ou du pigment choisi.

Les protocoles décrits ci-dessous ont été mis au point et permettent de maîtriser au mieux les points suivants : pas de chauffe possible directement dans la cabine (pour ne pas perturber l'atmosphère et l'appareil photo) mais prise de photo à une température ciblée, grâce au chronométrage des phases de transfert.

*i. Matériel*

- Thermomètre avec sonde de contact
- Chronomètre
- Plaque chauffante
- Cabine photo lumineuse
- Appareil photo CANON EOS 13000D (Objectif 28mm grand angle Canon)
- Lames de verre
- Logiciels pour acquisition des données : Capture One et Photoshop

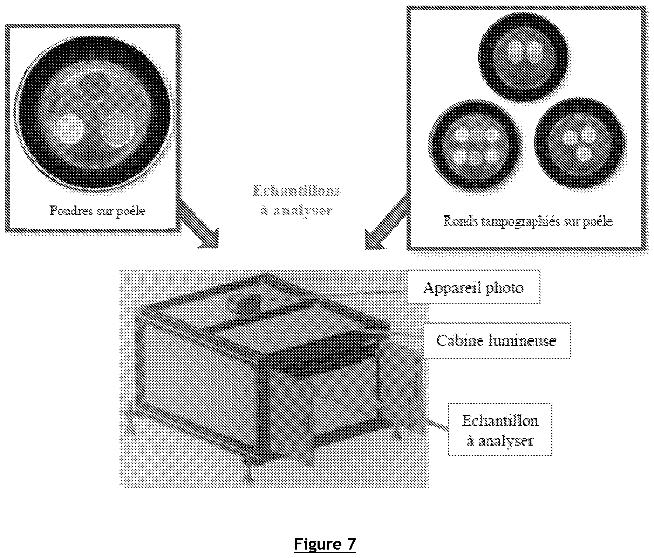

*ii. Protocole pour échantillons sous forme de décor tampographié sur poêle (Figure 7)*

- Chronométrer le temps nécessaire pour déplacer la poêle contenant les ronds tampographiés des pigments, de la plaque chauffante à la cabine, fermer cette dernière, déclencher l'appareil photo. (t = 15 sec).
- Chauffer et stabiliser l'échantillon autour de la température cible.
- Tester la température qui au bout de 15 sec s'ajuste à la température voulue.
- Simuler 3 fois avec cette température pour confirmer ou ajuster selon la température de l'échantillon obtenue après les 15 sec.
- Lancer l'acquisition.
- Réaliser la caractérisation en sélectionnant grâce au logiciel la surface de photo à analyser puis relever les valeurs L*a*b*.
- Le logiciel Capture One est utilisé pour la capture de l'image au format RAW, qui permet ultérieurement une conversion en tout autre format de fichier.
- Le logiciel Photoshop utilisé ensuite permet la dérawtisation du fichier (conversion en format TIFF). Il permet également d'effectuer la conversion d'un espace colorimétrique RVB à un espace CIE L*a*b* avec un illuminant D50.

*iii. Protocole pour échantillons sous forme de poudre (Figure 7)*

- Réaliser 3 tas de poudres différentes et séparées dans une poêle (environ une cuillère à café).

- Aplatir grâce à une lame de verre les tas de poudre afin d'avoir des surfaces lisses, homogènes et de mêmes épaisseurs.

- Pour la suite, réaliser le même protocole que précédemment.

## Exemple 6 : Exploitation des résultats

*i. Calculs des ΔE* d'un échantillon à plusieurs températures*

Prenons pour l'exemple le pigment $Fe_2O_3$ sous forme de poudre.

Voici ci-dessous les coordonnées L*a*b* et résultats ΔE* de $Fe_2O_3$ pour chaque température :

| T°C objectif | Température ambiante = 25°C | | | 100°C | | | | 150°C | | | |
|---|---|---|---|---|---|---|---|---|---|---|---|
| Coordonnées | L* | a* | b* | L* | a* | b* | ΔE* (TA) | L* | a* | b* | ΔE* (TA) |
| $Fe_2O_3$ | 35,9 | 34,2 | 23,1 | 32,5 | 30,4 | 18,8 | 6,7 | 29,2 | 26,4 | 15,5 | 12,8 |
| T°C objectif | 180°C | | | | 200°C | | | | 250°C | | | |
| Coordonnées | L* | a* | b* | ΔE* (TA) | L* | a* | b* | ΔE* (TA) | L* | a* | b* | ΔE* (TA) |
| $Fe_2O_3$ | 30,0 | 25,4 | 14,6 | 13,5 | 30,0 | 24,2 | 13,9 | 14,8 | 28,7 | 21,9 | 12,2 | 18,0 |

$$\Delta E^*_{100°C} = \sqrt{(L^*_{100} - L^*_{25})^2 + (a^*_{100} - a^*_{25})^2 + (b^*_{100} - b^*_{25})^2}$$

$$\Delta E^*_{100°C} = \sqrt{(32,5 - 35,9)^2 + (30,4 - 34,2)^2 + (18,8 - 23,1)^2} = 6,7104$$

| Valeurs des ΔE* calculés pour chaque échantillon à des températures données | | | | | | | | |
|---|---|---|---|---|---|---|---|---|
| Poudres | T°C | 25 | 100 | 150 | 180 | 200 | 250 |
| $BiVO_4$ 2d | | 0 | 14,3 | 31,4 | 39,2 | 43,6 | 59,5 |
| $BiVO_4$ 2b | | 0 | 21,2 | 37 | 41,8 | 45,2 | 53,4 |
| $Bi_2O_3$ | | 0 | 18,3 | 30 | 37 | 42,1 | 52,2 |
| Sicopal Yellow K1120FG | ΔE*(TA) | 0 | 12,6 | 19,9 | 20,9 | 19,1 | 23,6 |
| Bayferrox 130 | | 0 | 6,7 | 12,8 | 13,5 | 14,8 | 18 |
| Yellow 10C242 | | 0 | 1,7 | 3,2 | 3,6 | 5,3 | 6,4 |
| Yellow 6716B | | 0 | 1,7 | 3,9 | 4,3 | 5,6 | 6,7 |
| | | | | | | | |
| Poêles avec décor tampographié | T°C | 25 | 100 | 150 | 180 | 200 | 250 |
| $BiVO_4$ 2d | | 0 | 9 | 17,6 | 22,8 | 25,4 | 34,9 |
| $BiVO_4$ 2b | ΔE*(TA) | 0 | 9 | 15,6 | 20,8 | 23,4 | 32,1 |
| Bayferrox 130 | | 0 | 6,1 | 9,4 | 12 | 14,1 | 18,4 |
| Yellow 10C242 | | 0 | 1,7 | 2,3 | 2,8 | 3,2 | 4,2 |

### ii. Interprétations graphiques

Les ΔE* calculés pour chaque échantillon à différentes températures permettent de visualiser par le biais de graphiques (ΔE*= f (Température °C)) l'évolution de l'écart colorimétrique par rapport à la couleur à la température ambiante.

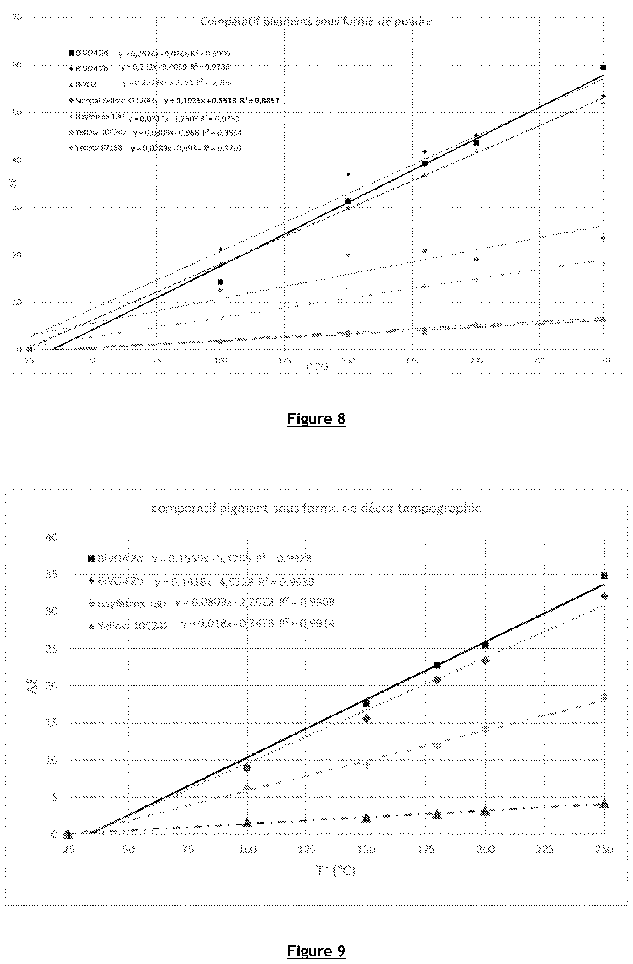

Le graphique (Figure 8) montre les variations de couleur de chaque pigment sous forme de poudre.

Les pigments étudiés dans ce cas présentent tous une évolution de couleur en fonction de la température assez linéaire.

Les « très bons » thermochromes présentent un écart de couleur ΔE* entre 25°C et 200°C supérieur ou égal à 40 et une évolution de l'écart de couleur ΔE* en fonction de la température linéaire avec une pente supérieure ou égale à 0,2.

Les « bons » thermochromes présentent un écart de couleur ΔE* entre 25°C et 200° C compris de 30 à 40 et une évolution de l'écart de couleur ΔE* en fonction de la température linéaire avec une pente supérieure ou égale à 0,2.

Les thermochromes « moyens » présentent un écart de couleur ΔE* entre 25°C et 200°C compris de 10 à 30 et une évolution de l'écart de couleur ΔE* en fonction de la température linéaire avec une pente comprise de 0,05 à 0,2.

Les thermostables, présentent un écart de couleur ΔE* entre 25°C et 200°C inférieur à 10 et une évolution de l'écart de couleur ΔE* en fonction de la température linéaire avec une pente inférieure à 0,05.

Le graphique (Figure 9) montre les variations de couleur de chaque pigment sous forme de décor tampographié dans un revêtement anti-adhésif tel que décrit précédemment.

Les matériaux colorés intégrés dans un revêtement anti-adhésif étudiés dans ce cas présentent aussi tous une évolution de couleur en fonction de la température assez linéaire. Les comportements d'évolution de la couleur en fonction de la température et la classification des composés les uns par rapport aux autres sont très similaires aux observations faites avec les matériaux sous forme de poudre. Une nette diminution des écarts de couleurs est cependant observée, liée à l'intégration dans le revêtement anti-adhésif et très probablement lié à l'effet 'filtre' de la couche de finition qui n'est pas parfaitement transparente.

Les « très bons » thermochromes intégrés dans un revêtement anti-adhésif présentent un écart de couleur ΔE* entre 25°C et 200°C supérieur ou égal à 20 et une évolution de l'écart de couleur ΔE* en fonction de la température linéaire avec une pente supérieure ou égale à 0,1.

Les « bons » thermochromes intégrés dans un revêtement anti-adhésif présentent un écart de couleur ΔE* entre 25°C et 200°C compris de 15 à 20 et une évolution de l'écart de couleur ΔE* en fonction de la température linéaire avec une pente supérieure ou égale à 0,1.

Les thermochromes « moyens » intégrés dans un revêtement anti-adhésif présentent un écart de couleur ΔE* entre 25°C et 200°C compris de 7 à 15 et une évolution de l'écart de couleur ΔE* en fonction de la température linéaire avec une pente comprise de 0,05 à 0,1.

Les thermostables, intégrés dans un revêtement anti-adhésif présentent un écart de couleur ΔE* entre 25°C et 200°C inférieur à 7 et une évolution de l'écart de couleur ΔE* en fonction de la température linéaire avec une pente inférieure à 0,05.

**Revendications**

1. Revêtement de la surface d'un article ménager comprenant un décor (a) comprenant un composé pigmentaire $BiVO_4$ présentant un ΔE* dans ledit revêtement supérieur ou égal à 11 entre la température ambiante et 150°C, ΔE* étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1{}^*$, $a_1{}^*$ et $b_1{}^*$ caractérisant les valeurs L*a*b* dudit composé à température ambiante
$L_2{}^*$, $a_2{}^*$ et $b_2{}^*$ caractérisant les valeurs L*a*b* dudit composé à 150°C.

2. Revêtement de la surface d'un article ménager comprenant un décor (a) comprenant un composé pigmentaire $BiVO_4$ présentant un ΔE* dans ledit revêtement supérieur ou égal à 15 entre la température ambiante et 200°C, ΔE* étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1{}^*$, $a_1{}^*$ et $b_1{}^*$ caractérisant les valeurs L*a*b dudit composé à température ambiante
$L_2{}^*$, $a_2{}^*$ et $b_2{}^*$ caractérisant les valeurs L*a*b dudit composé à 200°C.

3. Revêtement selon la revendication 1 ou 2 comprenant au moins le décor (a) tel que défini à l'une des revendications 1 ou 2 et un décor (b) agencés entre ou dans ses couches, ledit décor (b) comprenant une composition pigmentaire de référence de température.

4. Revêtement selon la revendication 3, **caractérisé en ce que** chacun des deux décors (a) et (b) se présente sous forme de motifs adjacents non chevauchants.

5. Revêtement selon la revendication 3, **caractérisé en ce que** les deux décors (a) et (b) sont partiellement chevauchants.

6. Revêtement selon la revendication 3, **caractérisé en ce que** les deux décors (a) et (b) se présentent sous forme de deux motifs chevauchants.

7. Revêtement selon l'une quelconque des revendications 1 à 6, comprenant une ou plusieurs couches de finition.

8. Revêtement selon l'une quelconque des revendications 1 à 7, le décor étant appliqué par sérigraphie ou tampographie.

9. Revêtement selon l'une quelconque des revendications 1 à 8, dans lequel le taux du composé pigmentaire $BiVO_4$ dans le décor (a) est compris de 0,1 à 100 % en poids par rapport au poids de ladite couche à l'état sec, de préférence de 0,2 à 80 % en poids.

10. Article ménager comprenant un substrat, de préférence métallique, recouvert en tout ou partie d'un revêtement selon l'une quelconque des revendications 1 à 9.

11. Article ménager selon la revendication 10, **caractérisé en ce qu'**il s'agit d'un article culinaire et **en ce que** le revêtement recouvre en tout ou partie le substrat sur la face recevant les aliments.

**12.** Article ménager selon la revendication 10 ou 11, le substrat étant en plastique, en matériau métallique, en verre, en céramique ou en terre cuite, de préférence en aluminium ou alliage d'aluminium anodisé ou non, ou en aluminium ou alliage d'aluminium poli, brossé ou microbillé, sablé, traité chimiquement ou en acier inoxydable poli, brossé ou microbillé, ou en fonte de fer ou d'aluminium, ou en titane ou en cuivre martelé ou poli.

**13.** Article ménager culinaire selon la revendication 11 ou 12, ledit article culinaire étant choisi dans le groupe constitué de casserole, poêle, fait-tout, wok, sauteuse, crêpière, grill, plancha, appareil à raclette, marmite, cocotte.

**14.** Composé pigmentaire $BiVO_4$ présentant un $\Delta E^*$ supérieur ou égal à 22 entre la température ambiante et 150°C, $\Delta E^*$ étant défini par la formule CIE 1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 150°C.

**15.** Composé pigmentaire $BiVO_4$ présentant un $\Delta E^*$ supérieur ou égal à 30 entre la température ambiante et 200°C, $\Delta E^*$ étant défini par la formule CIE1976 dans l'espace colorimétrique CIELAB :

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ et $b_1^*$ caractérisant les valeurs L*a*b dudit composé à température ambiante
$L_2^*$, $a_2^*$ et $b_2^*$ caractérisant les valeurs L*a*b dudit composé à 200°C.

**16.** Composé selon la revendication 14 ou 15, de structure cristalline monoclinique scheelite à température ambiante.

**Patentansprüche**

**1.** Beschichtung der Oberfläche eines Haushaltsgegenstands, die ein Dekor (a) umfasst, das eine $BiVO_4$ Pigmentverbindung mit einem $\Delta E^*$ in der genannten Beschichtung größer oder gleich 11 zwischen Raumtemperatur und 150 °C umfasst, wobei $\Delta E^*$ durch die Formel CIE1976 im CIELAB-Farbraum definiert ist:

$$\Delta E^* = \sqrt{(L_2{}^* - L_1{}^*)^2 + (a_2{}^* - a_1{}^*)^2 + (b_2{}^* - b_1{}^*)^2}$$

Wobei $L_1^*$, $a_1^*$ und $b_1^*$ die Werte L*a*b* der besagten Verbindung bei Raumtemperatur und $L_2^*$, $a_2^*$ und $b_2^*$ die Werte L*a*b* der besagten Verbindung bei 150 °C kennzeichnen.

**2.** Beschichtung der Oberfläche eines Haushaltsgegenstands, die ein Dekor (a) umfasst, das eine $BiVO_4$ Pigmentverbindung mit einem $\Delta E^*$ in der genannten Beschichtung größer oder gleich 15 zwischen Raumtemperatur und 200 °C umfasst, wobei $\Delta E^*$ durch die Formel CIE1976 im CIELAB-Farbraum definiert ist:

$$\Delta E^* = \sqrt{(L_2{}^* - L_1{}^*)^2 + (a_2{}^* - a_1{}^*)^2 + (b_2{}^* - b_1{}^*)^2}$$

Wobei $L_1^*$, $a_1^*$ und $b_1^*$ die Werte L*a*b* der besagten Verbindung bei Raumtemperatur und $L_2^*$, $a_2^*$ und $b_2^*$ die Werte L*a*b* der besagten Verbindung bei 200 °C kennzeichnen.

**3.** Beschichtung nach Anspruch 1 oder 2, die wenigstens das Dekor (a) gemäß einem der Ansprüche 1 oder 2 und ein Dekor (b) umfasst, das zwischen oder in seinen Schichten angeordnet ist, wobei das Dekor (b) eine Temperaturreferenz-Pigmentzusammensetzung umfasst.

4.  Beschichtung nach Anspruch 3, **dadurch gekennzeichnet, dass** jedes der beiden Dekore (a) und (b) in Form von nicht überlappenden benachbarten Mustern vorliegt.

5.  Beschichtung nach Anspruch 3, **dadurch gekennzeichnet, dass** die beiden Dekore (a) und (b) teilweise überlappend sind.

6.  Beschichtung nach Anspruch 3, **dadurch gekennzeichnet, dass** die beiden Dekore (a) und (b) in Form von zwei überlappenden Mustern vorliegen.

7.  Beschichtung nach einem der Ansprüche 1 bis 6, eine oder mehrere Deckschichten umfassend.

8.  Beschichtung nach einem der Ansprüche 1 bis 7, wobei das Dekor durch Sieb- oder Tampondruck aufgebracht wird.

9.  Beschichtung nach einem der Ansprüche 1 bis 8, wobei der Anteil der $BiVO_4$ Pigmentverbindung im Dekor (a) 0,1 bis 100 Gew.-% bezogen auf das Gewicht der Beschichtung im trockenen Zustand, vorzugsweise 0,2 bis 80 Gew.-% beträgt.

10. Haushaltsgegenstand, der ein Substrat, vorzugsweise aus Metall, umfasst, das ganz oder teilweise mit einer Beschichtung nach einem der Ansprüche 1 bis 9 überzogen ist.

11. Haushaltsgegenstand nach Anspruch 10, **dadurch gekennzeichnet, dass** es sich um einen Kochgegenstand handelt und dass das Substrat auf der Nahrungsaufnahmeseite ganz oder teilweise von der Beschichtung überzogen ist.

12. Haushaltsgegenstand nach Anspruch 10 oder 11, wobei das Substrat aus Kunststoff, Metall, Glas, Keramik oder Terrakotta, vorzugsweise aus eloxiertem oder nicht eloxiertem Aluminium oder Aluminiumlegierung oder aus Aluminium oder Aluminiumlegierung poliert, gebürstet oder kugelgestrahlt, sandgestrahlt, chemisch behandelt oder aus poliertem, gebürstetem oder kugelgestrahltem Edelstahl oder aus Eisenguss oder Aluminium oder aus Titan oder gehämmertem oder poliertem Kupfer besteht.

13. Haushaltsgegenstand nach Anspruch 11 oder 12, wobei der Haushaltsgegenstand aus der Gruppe ausgewählt wird, bestehend aus Topf, Pfanne, Schmortopf, Wok, Bratpfanne, Crêpe-Pfanne, Grill, Plancha, Raclette-Grill, Kessel, Kochtopf.

14. $BiVO_4$ Pigmentverbindung mit einem $\Delta E^*$ größer oder gleich 22 zwischen Raumtemperatur und 150 °C, wobei $\Delta E^*$ durch die Formel CIE1976 im CIELAB-Farbraum definiert ist:

$$\Delta E^* = \sqrt{(L_2{}^* - L_1{}^*)^2 + (a_2{}^* - a_1{}^*)^2 + (b_2{}^* - b_1{}^*)^2}$$

Wobei $L_1^*$, $a_1^*$ und $b_1^*$ die Werte L\*a\*b\* der besagten Verbindung bei Raumtemperatur und $L_2^*$, $a_2^*$ und $b_2^*$ die Werte L\*a\*b\* der besagten Verbindung bei 150 °C kennzeichnen.

15. $BiVO_4$ Pigmentverbindung mit einem $\Delta E^*$ größer oder gleich 30 zwischen Raumtemperatur und 200 °C, wobei $\Delta E^*$ durch die Formel CIE1976 im CIELAB-Farbraum definiert ist:

$$\Delta E^* = \sqrt{(L_2{}^* - L_1{}^*)^2 + (a_2{}^* - a_1{}^*)^2 + (b_2{}^* - b_1{}^*)^2}$$

Wobei $L_1^*$, $a_1^*$ und $b_1^*$ die Werte L\*a\*b\* der besagten Verbindung bei Raumtemperatur und $L_2^*$, $a_2^*$ und $b_2^*$ die Werte L\*a\*b\* der besagten Verbindung bei 200 °C kennzeichnen.

16. Verbindung nach Anspruch 14 oder 15, aus monoklinischer Scheelit-Kristallstruktur bei Raumtemperatur.

**Claims**

1. A coating for the surface of a household article comprising a decoration (a) comprising a $BiVO_4$ pigment compound having a $\Delta E^*$ in said coating greater than or equal to 11 between ambient temperature and 150°C, wherein $\Delta E^*$ is defined by the CIE1976 formula in the CIELAB colorimetric space:

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ and $b_1^*$ characterising the L*a*b* values of said compound at ambient temperature, $L_2^*$, $a_2^*$ and $b_2^*$ characterising the L*a*b* values of said compound at 150°C.

2. A coating for the surface of a household article comprising a decoration (a) comprising a $BiVO_4$ pigment compound having a $\Delta E^*$ in said coating greater than or equal to 15 between ambient temperature and 200°C, wherein $\Delta E^*$ is defined by the CIE1976 formula in the CIELAB colorimetric space:

$$\Delta E^* = \sqrt{(L_2{}^* - L_1{}^*)^2 + (a_2{}^* - a_1{}^*)^2 + (b_2{}^* - b_1{}^*)^2}$$

$L_1^*$, $a_1^*$ and $b_1^*$ characterising the L*a*b values of said compound at ambient temperature, $L_2^*$, $a_2^*$ and $b_2^*$ characterising the L*a*b values of said compound at 200°C.

3. The coating according to claim 1 or 2, comprising at least the decoration (a) as defined in one of claims 1 or 2 and a decoration (b) arranged in between or in its layers, said decoration (b) comprising a temperature reference pigment composition.

4. The coating according to claim 3, **characterised in that** each of the two decorations (a) and (b) is in the form of adjacent non-overlapping patterns.

5. The coating according to claim 3, **characterised in that** the two decorations (a) and (b) are partially overlapping.

6. The coating according to claim 3, **characterised in that** the two decorations (a) and (b) are in the form of two overlapping patterns.

7. The coating according to any of claims 1 to 6, comprising one or more top coats.

8. The coating according to any of claims 1 to 7, wherein the decoration is applied by screen printing or pad printing.

9. The coating according to one of claims 1 to 8, wherein the amount of the $BiVO_4$ pigment compound in the decoration (a) is from 0.1 to 100% by weight relative to the weight of said layer in the dry state, preferably from 0.2 to 80% by weight.

10. A household article comprising a substrate, preferably metallic, wholly or partly covered with a coating according to any of claims 1 to 9.

11. The household article according to claim 10, **characterised in that** it is a cooking article and **in that** the coating wholly or partly covers the substrate on the food-receiving face.

12. The household article according to claim 10 or 11, wherein the substrate is of plastic, metal material, glass, ceramic or clay, preferably anodised or unanodised aluminium or aluminium alloy, or polished, brushed or bead-blasted, sandblasted, chemically treated aluminium or aluminium alloy, or polished, brushed or bead-blasted stainless steel, or cast iron or aluminium, or titanium or hammered or polished copper.

13. The cooking household article according to claim 11 or 12, wherein said cooking article is chosen from the group consisting of saucepan, frying pan, cooking pot, wok, sauté pan, crepe pan, grill, plancha, raclette apparatus, cooking pot, cooker.

14. A BiVO$_4$ pigment compound having a $\Delta$E* greater than or equal to 22 between ambient temperature and 150°C, wherein $\Delta$E* is defined by the CIE 1976 formula in the CIELAB colorimetric space:

$$\Delta E^* = \sqrt{(L_2^* - L_1^*)^2 + (a_2^* - a_1^*)^2 + (b_2^* - b_1^*)^2}$$

L$_1$*, a$_1$* and b$_1$* characterising the L*a*b values of said compound at ambient temperature, L$_2$*, a$_2$* and b$_2$* characterising the L*a*b values of said compound at 150°C.

15. A BiVO$_4$ pigment compound having a $\Delta$E* greater than or equal to 30 between ambient temperature and 200°C, wherein $\Delta$E* is defined by the CIE1976 formula in the CIELAB colorimetric space:

$$\Delta E^* = \sqrt{(L_2^* - L_1^*)^2 + (a_2^* - a_1^*)^2 + (b_2^* - b_1^*)^2}$$

L$_1$*, a$_1$* and b$_1$* characterising the L*a*b values of said compound at ambient temperature, L$_2$*, a$_2$* and b$_2$* characterising the L*a*b values of said compound at 200°C.

16. The compound according to claim 14 or 15, of the monoclinic scheelite crystalline structure at ambient temperature.

Figure 1

Figure 2

Figure 3

Largeur du Gap (eV)

Couleur observée

**Figure 4**

Cible

Appareil photographique

Ordinateur

Source lumineuse

Echantillon

**Figure 5**

Finish transparent

Couche de décor (comportant un composé thermochrome)

Couches primaires opaque

Substrat métallique

**Figure 6**

Poudres sur poêle

Echantillons à analyser

Ronds tampographiés sur poêle

Appareil photo

Cabine lumineuse

Echantillon à analyser

**Figure 7**

**Figure 8**

**Figure 9**

| décor (a) | décor (b) |
|---|---|
| Vue dessus | Vue coupe |
| A | |
| B | |
| C | |

**Figure 10**

## RÉFÉRENCES CITÉES DANS LA DESCRIPTION

**Documents brevets cités dans la description**

- FR 1388029
- CN 201822599
- EP 1121576 A
- CN 101070435